# EUROPEAN PATENT SPECIFICATION

(11) **EP 0 687 949 B1**
(45) Date of publication and mention of the grant of the patent: **21.04.1999**
(21) Application number: 94304429.7
(22) Date of filing: 17.06.1994
(51) Int. Cl.: G03C 3/00, D04B 21/02, G03B 17/30

(54) **Teremp fabric**
Plüschgewebe
Tissu bouclé

(43) Date of publication of application: 20.12.1995
(73) Proprietor: MILLIKEN RESEARCH CORPORATION, Spartanburg South Carolina 29304 (US)
(72) Inventor: Lesley, Bascum Gregory, Picken, SC 29671, Pickens (US)
(74) Representative: Pacitti, Pierpaolo A.M.E.

(56) References cited:
- EP-A- 0 440 240
- EP-A- 0 452 900
- EP-A- 0 466 192
- US-A- 5 275 283

## Description

This invention relates to a film container having a teremp cloth bonded to the film withdrawing outlet.

Film containers, especially photographic film containers, are classified into two groups, ie. cassettes for sheet films and cartridges for roll films. Each of the film containers has a light shielding member at its opening (outlet) through which the film is withdrawn in order to prevent the film from being prematurely exposed by light in the container. The light shielding member which is made of cloth is called a teremp cloth.

The teremp cloth is black so as to sufficiently protect the photographic film from unwanted exposure. In addition, the teremp cloth should be flexible so that the film will not be scratched or damaged when it is withdrawn or rewound.

The film container disclosed in United States Patent Application No 5275283 provides a container for a roll of light-sensitive strip material wherein the pile yarn of teremp cloth, relatively to known art, is not deeply impregnated with a filling material solution. The container has a core on which the light-sensitive material is coiled to form a roll, an opening for drawing out the light-sensitive strip and a teremp cloth provided on the opening, where the teremp cloth has a filling layer formed of polyolefin copolymer resin which is used as an adhesive layer for fixing the teremp cloth on the container body, and in which the teremp cloth may be a warp knitted fabric.

This however does not fully address the problems which occur in the exposure and development of light-sensitive material caused by the adhesion of pile yarn dust, as the teremp cloth in such a case is generally manufactured with additional pile warp yarns inserted and a filling material added. This method of manufacturing the teremp cloth does not entirely prevent the falling out of pile yarns and the problems associated therewith.

The light-shielding cloth and film container incorporating the cloth disclosed in European Patent Application No 0452900 provides a teremp cloth comprising a ground fabric and an additional pile portion of pile warp yarn knitted thereinto, where the pile yarn passes between the needle and the sinker loop which together comprise the ground fabric. The pile yarns are entangled with the needle loop and sinker loops in order to improve the light-shielding ability, however, this again does not entirely prevent the falling out of pile yarns and the problems associated therewith.

European Patent Application No 0440240 discloses a container for a roll of light-sensitive strip material provided with an opening for drawing out the light-sensitive strip material from the container, teremp cloth being provided in the opening. The teremp cloth comprises a single bar warp knit fabric having a single warp chain yarn and inlaid yarns knit into the fabric. The cloth has additional pile yarns which are erected to obtain a light trap fabric. The pile yarns can come loose from the teremp cloth and damage the light sensitive film.

An object of the present invention is to provide a film container having a teremp cloth which is manufactured at low cost by a relatively simple method, and a teremp cloth which is free from the problems in which yarns come loose or become frayed.

The foregoing object of the present invention has been achieved by the provision of a film container which, according to the present invention, is characterised in that the teremp cloth comprises a two bar warp knit, weft inserted fabric having fibres raised therefrom by napping without the knitting in of additional pile yarns to prevent light from entering the opening in said container.

Other objects and advantages of the invention will become readily apparent as the specification proceeds to describe the invention with reference to the accompanying drawings, in which:
Figure 1 is a schematic view of the new and improved teremp cloth;
Figure 2 is a partially sectional view showing the new teremp cloth mounted in the outlet of a conventional film cartridge pack; and
Figures 3-5 schematically represent the bar movement of a warp knit knitting machine to produce teremp fabric of Figures 1 and 2.

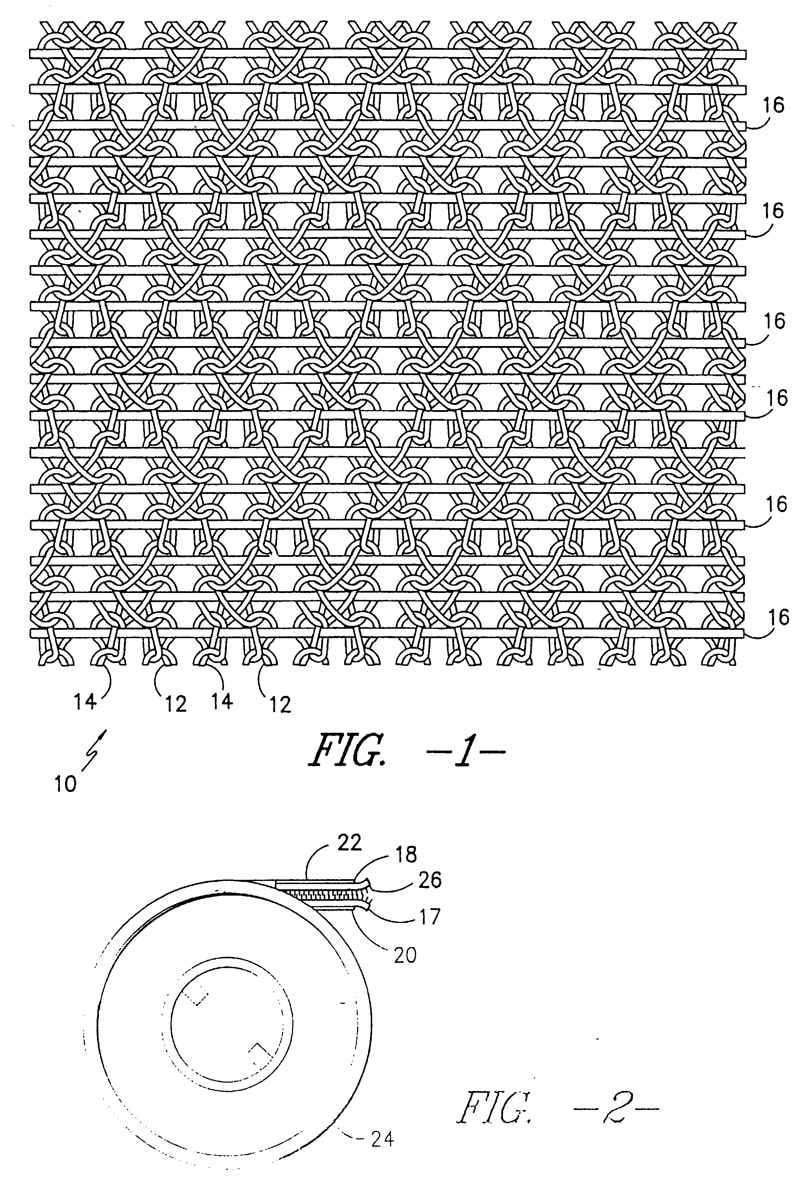

Looking now to Figure 1 there is represented a two bar warp knit fabric 10 having a first warp yarn 12 knit on bar 1 of the knitting machine, a second warp yarn 14 on bar 2 of the knitting machine and a weft inserted yarn 16. The fabric 10 after being knit is then successively, in wide widths off the knitting machine, dyed, dried, napped, sheared and heat set to produce the desired teremp cloth 17. After heat setting the fabric is cut to the desired size and attached by suitable means to the inner faces 18 and 20 of the opening 22 of the light sensitive material container 24. The pile fibers 26 are raised by napping and shearing of the fabric 10 provide the light blocking material in the opening 22 of the container 24.

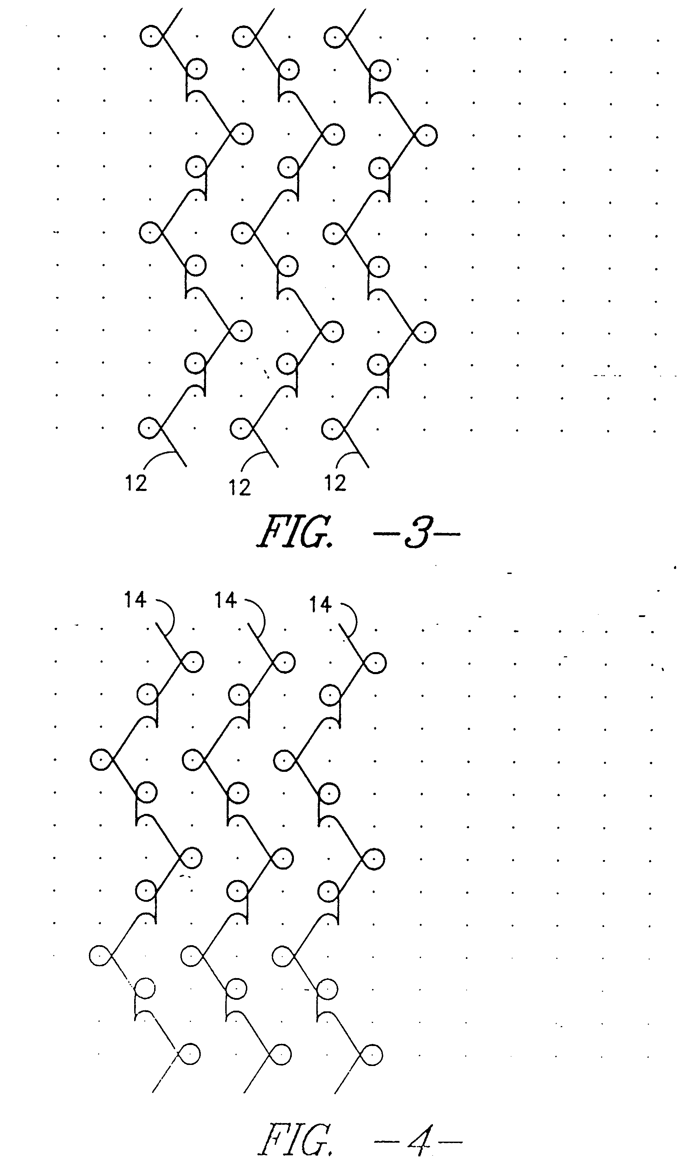

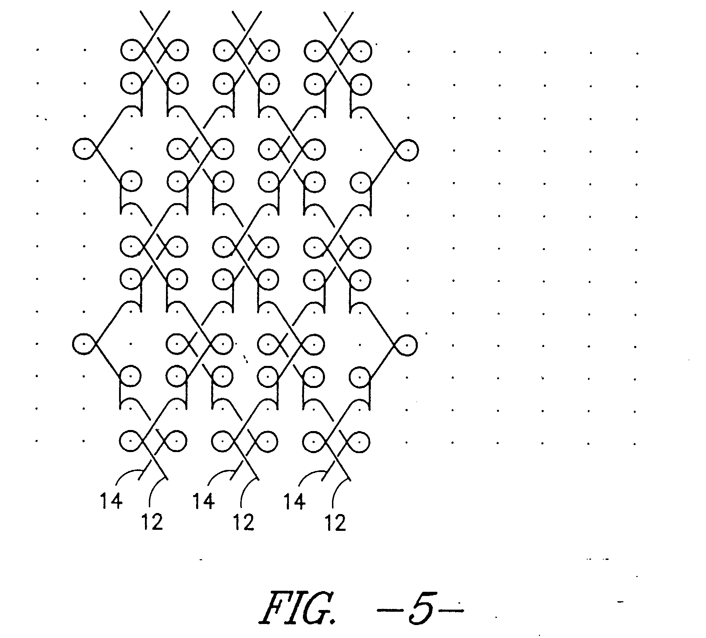

In the preferred form of the agreement the warp knit, weft inserted fabric is knit on a Raschel warp knitting machine using two bars. As indicated in Figure 3, bar 1 is knitting 2-3, 2-1, 1-2, 1-0, 1-2, 2-1 and as, shown in Figure 4, bar 2 is knitting 1-0, 1-2, 2-1, 2-3, 2-1, 1-2 to form the fabric shown in Figure 5. Since the weft yarn 16 is being inserted while bars 1 and 2 are knitting as described above the resultant fabric is as shown in Figure 1 to perform the function shown in Figure 2 after it has been napped and sheared.

The preferred warp yarn is a 40 denier, 27 filament polyester yarn and a number of weft yarns can be employed, if desired. The preferred weft yarns are either a 4 ply, 100 denier, 100 filament polyester yarn or a 20/2 (cotton count) spun staple polyester yarn. Other yarns can be employed but these two appear to perform the best as a teremp fabric after they have been napped and sheared.

In the present invention, the teremp cloth having a weft inserted warp knitted structure is used. Accordingly, no waste pile yarns are created during the manufacture of the teremp cloth, and no yarns come loose from the teremp cloth when the latter is brought into contact with the film at the film withdrawing outlet of the film cartridge. The knitting speed is several times as fast as the weaving speed in the manufacture of a teremp cloth, and it is unnecessary to use an adhesive in the knitted teremp cloth. Thus, the film cartridge with a teremp cloth according to the present invention can be manufactured at considerably lower cost as compared to a film cartridge using a conventional teremp cloth.

## Claims

1. A container (24) for a roll of light-sensitive strip material provided with an opening (22) for drawing out said light-sensitive strip material from said container (24), teremp cloth (17) being provided in said opening characterised in that: the teremp cloth (17) comprises a two bar warp (12,14) knit, weft (16) inserted fabric having fibres (26) raised therefrom by napping without the knitting in of additional pile yarns to prevent light from entering the opening (22) in said container (24).

2. A container (24) as claimed in Claim 1 wherein said teremp cloth warp yarns (12, 14) are substantially 100% polyester.

3. A container (24) as claimed in Claim 1 or Claim 2 wherein the weft inserted yarn (16) is a polyester yarn.

4. A container (24) as claimed in any one of the preceding Claims wherein the weft yarn (16) is a spun, staple length yarn.

## Patentansprüche

1. Ein Behälter (24) für eine Rolle lichtempfindlichen Streifenmaterials, der mit einer Öffnung (22) vorsehen ist, um das lichtempfindliche Streifenmaterial aus dem Behälter (24) herauszuziehen, wobei Plüschgewebe ("Teremp") (17) in dieser Öffnung bereitgestellt wird, dadurch gekennzeichnet, daß:
das Plüschgewebe (17) ein zweibändiges kettengewirktes (12,14), mit Schuß (16) eingetragenes Gewebe umfaßt, bei dem durch Aufrauhen ohne Einbindung von zusätzlichen Florfäden Faser (26) aufgerauht werden, um zu vermeiden, daß Licht in die Öffnung (22) im Behälter (24) eintritt.

2. Behälter (24) gemäß Anspruch 1, wobei die Kettgarne (12, 14) des Plüschgewebes im wesentlichen 100% Polyester sind.

3. Behälter (24) gemäß Anspruch 1 oder Anspruch 2, wobei das mit Schuß eingetragene Garn (16) ein Polyestergarn ist.

4. Behälter (24) gemäß einem der vorhergehenden Ansprüche, wobei das Schußgarn (16) ein Spinnfasergarn mit Stapellänge ist.

## Revendications

1. Un récipient (24) pour un rouleau de bande de matière photosensible pourvu d'une ouverture (22) pour retirer ladite bande de matière photosensible du dit récipient (24), ladite ouverture étant pourvue du tissu bouclé "teremp" (17) caractérisé en ce que : le tissu bouclé "teremp" (17) comprend un tissu tricoté chaîne à deux barres (12, 14), avec trame insérée (16) dont on a redressé les fibres (26) par grattage sans l'ajout de fils de poils par points de liage afin d'empêcher la lumière de pénétrer dans l'ouverture (22) dans ledit récipient (24).

2. Un récipient (24) selon la revendication 1 dans lequel lesdits fils de chaîne du tissu bouclé "teremp" (12, 14) sont considérablement en 100% polyester.

3. Un récipient (24) selon la revendication 1 ou la revendication 2 dans lequel le fil de trame inséré (16) est un fil de polyester.

4. Un récipient (24) selon une quelconque des revendications précédentes dans lequel le fil de trame (16) est un fil filé de fibres discontinues.
